# EUROPÄISCHE PATENTSCHRIFT

(11) **EP 1 814 009 B1**
(45) Veröffentlichungstag und Bekanntmachung des Hinweises auf die Patenterteilung: **17.06.2009**
(21) Anmeldenummer: 07000212.6
(22) Anmeldetag: 08.01.2007
(51) Int. Cl.: G05D 23/13, G05D 23/02, F01P 7/16, F01M 5/00

(54) **Thermostatventil zum Verbinden eines automatischen Getriebes mit einem Ölkühler**
Thermostatic valve device for connecting an automatic transmission to an oil cooler
Vanne thermostatique destinée à raccorder un engrenage automatique à un refroidisseur d'huile

(30) Priorität: 19.01.2006 DE 102006003271
(43) Veröffentlichungstag der Anmeldung: 01.08.2007
(73) Patentinhaber: Behr Thermot-tronik GmbH, 70806 Kornwestheim (DE)
(72) Erfinder: Willers, Eike, Dr., 70469 Stuttgart (DE); Auweder, Andreas, 71665 Vaihingen (DE)
(74) Vertreter: Patentanwälte Ruff, Wilhelm, Beier, Dauster & Partner

(56) Entgegenhaltungen:
- DE-A1- 19 756 180
- US-A- 3 300 135
- US-A- 3 913 831
- US-A- 4 190 198
- US-A1- 2003 136 855

## Beschreibung

Die Erfindung betrifft ein Thermostatventil zum Verbinden eines automatischen Getriebes mit einem Ölkühler, das einen Einlasskanal für von dem Getriebe kommendes Öl, einen Auslasskanal zu dem Ölkühler, einen Einlasskanal für von dem Ölkühler kommendes Öl und einen Auslasskanal zu dem Getriebe aufweist, wobei die Verbindung zwischen dem Einlasskanal für von dem Getriebe kommendes Öl und dem Auslasskanal zu dem Ölkühler mittels eines von einem thermostatischen Arbeitselement betätigbaren, mit einer Rückstellfeder belasteten Ventilelement freigegeben oder gesperrt wird.

Es ist ein Ventil der eingangs genannten Art bekannt (US 5791557 A, US 2003/0136855 A), bei welchem ein Bypasskanal vorgesehen ist, der den Eingang für von dem Getriebe kommendes Öl mit dem Ausgang zu dem Getriebe offen hält, solange das thermostatische Arbeitselement noch nicht angesprochen hat. Wenn das thermostatische Arbeitselement aufgrund einer Temperaturerhöhung des Öls anspricht, wird der Bypass geschlossen. Bei extremen Wetterbedingungen kann es bei diesem Thermostatventil dazu kommen, dass das automatische Getriebe nicht ausreichend mit Öl versorgt wird und dadurch Schaden nehmen kann. Wenn sehr kalte Außentemperaturen gegeben sind, kann es vorkommen, dass das das Getriebe verlassende und in dem Bypass strömende Öl soweit aufgewärmt ist, dass das thermostatische Arbeitselement anspricht und die Verbindung von dem Einlasskanal für das vom Getriebe kommende Öl zu dem Auslasskanal zu dem Ölkühler freigibt und den Bypass absperrt. Die sehr kalten Außentemperaturen können jedoch dazu führen, dass das Öl in dem Ölkühler so stark gekühlt wird, dass der Strömungswiderstand in dem Ölkühler so groß wird, dass nicht genügend Öl zu dem automatischen Getriebe zurückströmt.

Es ist auch ein Thermostatventil bekannt (US 3913831 A), das eine Überdruckfunktion aufweist, sodass auch bei sehr kalten Außentemperaturen sichergestellt ist, dass eine genügend große Ölmenge zu dem Getriebe zurückströmt. Hierzu ist das thermostatische Arbeitselement nicht stationär abgestützt, sondern gegen eine Überdruckfeder.

Der Erfindung liegt die Aufgabe zugrunde, ein Thermostatventil der eingangs genannten Art so auszubilden, dass auch bei sehr kalten Außentemperaturen sichergestellt ist, dass immer eine genügend große Ölmenge zu dem automatischen Getriebe zurückströmt, ohne dass hierfür eine gesonderte Überdruckfeder vorgesehen werden muss.

Diese Aufgabe wird durch die Merkmale des Anspruches 1 gelöst.

Bei der erfindungsgemäßen Ausbildung wirkt das Thermostatventil in der Freigabestellung, d.h. wenn die Verbindung zwischen dem Einlasskanal für von dem Getriebe kommendes Öl zu dem Auslasskanal zum Kühler geöffnet ist, als Überdruckventil, das einen (zweiten) Kurzschluss zu dem Getriebe zurück.ermöglicht. Damit wird sichergestellt, dass bei sehr kalten Außentemperaturen Öl auch dann in ausreichender Menge zu dem Getriebe zurückfließt, wenn eine zunächst vorhandene Bypassverbindung durch Ansprechen des Thermostatventils geschlossen ist. Der (zweite) Kurzschlusskanal ist derart in dem Verstellweg des Ventilelements angeordnet, dass das Thermostatventil nicht aufgrund einer hohen Öltemperatur den Kurzschlusskanal freigibt, so dass auch bei sehr hohen Öltemperaturen das Öl vollständig durch den Ölkühler strömt und nicht etwa den Ölkühler umgeht und ungekühlt zu dem Getriebe zurückgeführt wird.

Weitere Merkmale und Vorteile der Erfindung ergeben sich aus der nachfolgenden Beschreibung der in den Zeichnungen dargestellten Ausführungsform.
- Fig. 1: zeigt einen Axialschnitt durch ein erfindungsgemäßes Thermostatventil in kaltem Zustand,
- Fig. 2: das Thermostatventil nach Fig. 1 bei geöffnetem Ventilelement,
- Fig. 3: einen Axialschnitt durch das Thermostatventil bei Auftreten eines Überdrucks und
- Fig. 4: einen Radialschnitt durch eine abgewandelte Ausführungsform eines erfindungsgemäßen Thermostatventils.

In einem Ventilgehäuse 10 ist eine zentrale Aufnahmebohrung 11 vorgesehen, in die ein Einlasskanal 12 für von einem automatischen Getriebe kommendes Öl mündet. An die Aufnahmebohrung 11 schließt auf der dem Einlasskanal 12 gegenüber liegenden Seite ein Auslasskanal an, der zu einem Ölkühler führt. Weiter schließt an die Aufnahmebohrung 11 ein Einlasskanal 14 an, über den von dem Ölkühler kommendes Öl zurückgeführt wird. Dieses Öl strömt über einen Auslasskanal 15 zurück zu dem Getriebe. In der Aufnahmebohrung 11 ist ein thermostatisches Arbeitselement angeordnet, das ein Gehäuse 16 aufweist, das mit einem temperaturabhängig sein Volumen ändernden Dehnstoff befüllt ist. Der Dehnstoff treibt einen Arbeitskolben 17 aus dem Gehäuse 16 des thermostatischen Arbeitselements aus, der sich an einem Verschlussstopfen 18 abstützt, mit welchem die Aufnahmebohrung 11 dichtend verschlossen ist. Der Stopfen 18 ist mit einem Dichtungsring 19 versehen und mittels eines Sicherungsrings 20 in seiner Position gehalten.

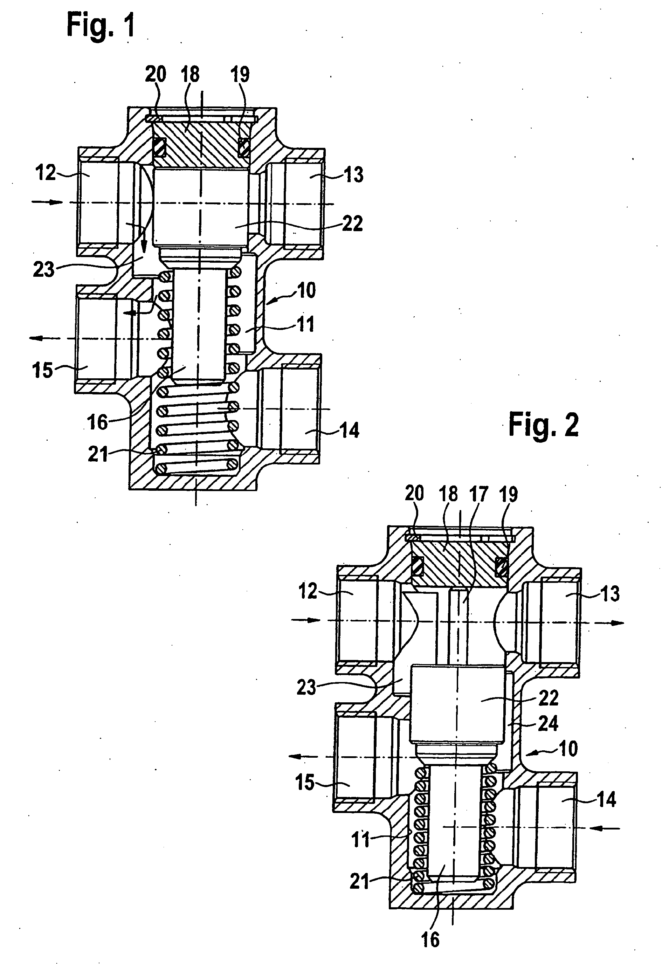

Das Gehäuse 16 des thermostatischen Arbeitselementes ist mit einer Rückstellfeder 21 belastet, deren gegenüberliegendes Ende an dem geschlossenen Boden der Aufnahmebohrung 11 abgestützt ist. Das Gehäuse 16 des thermostatischen Arbeitselementes ist fest mit einem Ventilschieberelement 22 verbunden, das in der Aufnahmebohrung 11 geführt ist und das in der Absperrstellung entsprechend Fig. 1 die Verbindung zwischen dem Einlasskanal 12 für von dem Getriebe kommendes Öl und dem Auslasskanal 13 zu dem Ölkühler sperrt. In die Aufnahmebohrung 11 ist auf der dem Einlasskanal 12 für von dem Getriebe kommendes Öl zugewandten Seite eine Längsnut 23 eingefräst, die in der Sperrstellung des Ventilelementes 22, d.h. wenn die Verbindung zwischen dem Einlasskanal 12 für von dem Getriebe kommendes Öl zu dem Auslasskanal 13 zu dem Ölkühler gesperrt ist, eine erste Kurzschlussverbindung zwischen dem Einlasskanal 12 für von dem Getriebe kommendes Öl und dem Auslasskanal 15 zu dem Getriebe herstellt, wie das in Fig. 1 dargestellt ist.

Das bei dem Betrieb sich erwärmende Öl des Getriebes strömt zunächst über die als erste Kurzschlussverbindung dienende Längsnut 23 zu dem Gehäuse 16 des thermostatischen Arbeitselementes, so dass dieses erwärmt wird, und der Arbeitskolben 17 bei Erreichen der Öffnungstemperatur ausfährt. Die Öffnungstemperatur kann beispielsweise bei 70°C liegen. Das thermostatische Arbeitselement ist in diesem Fall so ausgelegt, dass es bei 80°C vollständig geöffnet ist, d.h. im Wesentlichen die Position nach Fig. 2 erreicht hat. In dieser Freigabestellung ist das Ventilschieberelement 22 soweit verstellt worden, dass es über das Ende der Längsnut 23 hinausgefahren ist und somit die erste Kurzschlussverbindung zwischen dem Einlasskanal 12 für von dem Getriebe kommendes Öl und dem Auslasskanal 15 zu dem Getriebe sperrt. Das von dem Getriebe kommende Öl strömt somit vollständig über den Auslasskanal 13 zu dem Ölkühler und von dort zu dem Einlasskanal 14 und zu dem Auslasskanal 15 zu dem Getriebe zurück.

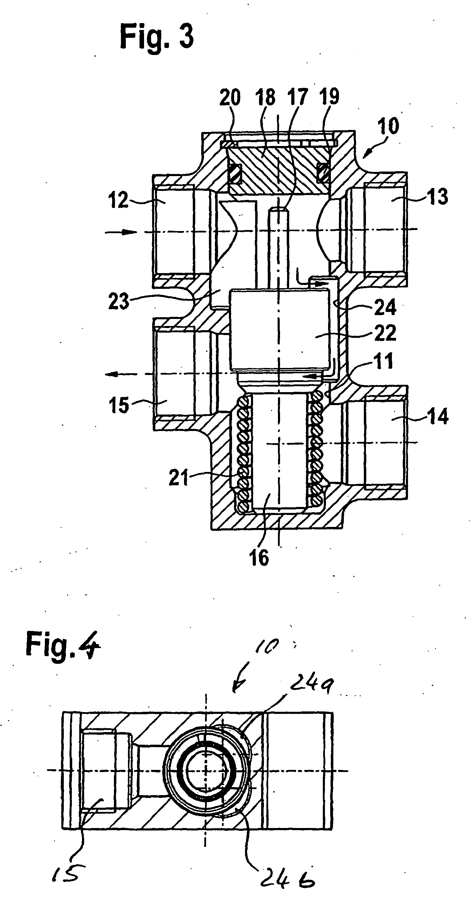

Wie bereits eingangs erwähnt wurde, kann bei extrem kalten Außentemperaturen (Umgebungstemperaturen) die Situation auftreten, dass das das Getriebe verlassende Öl bereits eine Temperatur erreicht hat, beispielsweise 80°C, die eine vollständige Freigabe der Verbindung zwischen dem Einlasskanal 12 für von dem Getriebe kommendes Öl und dem Auslasskanal 13 zu dem Ölkühler bewirkt und die erste Kurzschlussverbindung über die Längsnut 23 sperrt, während jedoch das zu dem Ölkühler gelangende Öl dort so stark abgekühlt wird, dass ein sehr großer Strömungswiderstand in dem Ölkühler auftritt. In diesem Fall besteht die Gefahr, dass das Getriebe nicht ausreichend mit Öl versorgt wird, da nicht genügend Öl über den Auslasskanal 15 zu dem Getriebe zurückströmt. Um diesem Fall Rechnung zu tragen, ist das Ventilschieberelement 22 zusammen mit der Rückstellfeder 21 so ausgelegt, dass es in der Freigabestellung entsprechend Fig. 2 die Funktion eines Überdruckventils besitzt. Hierzu sind zunächst die entgegen der Wirkung der Rückstellfeder 21 mit Druck des Öls beaufschlagbare Fläche des Ventilschieberelements 22 und die Rückstellfeder 21 so ausgelegt, dass bei einem erhöhten Druck von beispielsweise 4 bar bis etwa 5,5 bar das Ventilschieberelement 22 entgegen der Wirkung der Rückstellfeder 21 in der Aufnahmebohrung 11 verschoben wird. Durch dieses axiale Verschieben wird eine in der Aufnahmebohrung 11 diametral gegenüberliegend zu der Längsnut 23 eingefräste Längsnut 24 freigegeben, die einen zweiten Kurzschlusskanal zwischen dem Einlasskanal 12 für von dem Getriebe kommendes Öl und dem Auslasskanal 15 zu dem Getriebe herstellt. Somit wird auch für den geschilderten Fall sichergestellt, dass eine ausreichende Menge an Öl zu dem Getriebe zurückströmt. Die axiale Länge der Längsnut 24 ist so bemessen, dass das Schieberventilelement 22 in der aufgrund der Überdrucks erreichbaren Stellung (Fig. 3) zwischen der dem Arbeitskolben 17 zugewandten Kante des Schieberventilelementes 22 und der Längsnut 24 einen ausreichenden Spalt freigibt sowie ebenfalls zwischen dem dem Gehäuse 16 des thermostatischen Arbeitselementes zugewandten Ende des Ventilschieberelementes 22. Darüber hinaus ist die Längsnut 24 in Richtung des Verstellwegs des Ventilschieberelementes 22 so angeordnet, dass der zweite Kurzschlusskanal nicht freigegeben wird, wenn das Gehäuse 16 mit dem Ventilschieberelement 22 aufgrund der Öltemperatur ausgefahren wird. Damit wird sichergestellt, dass auch bei einer Öltemperatur von beispielsweise 160°C die gesamte Ölmenge durch den Ölkühler geleitet wird. Nur wenn ein Druck von 4 bar (oder 5,5 bar) erreicht wird, spricht das Überdruckventil an.

Bei einer abgewandelten Ausführungsform wird vorgesehen, dass der Arbeitskolben 17 sich an einer geschlossenen Wand des Ventilgehäuses 10 und die Rückstellfeder 21 an einem Stopfen ähnlich dem Stopfen 18 abstützen. Bei einer weiter abgewandelten Ausführungsform ist die Aufnahmebohrung 11 als Durchgangsbohrung ausgebildet und an beiden Enden mit je einem Stopfen versehen. Bei einer anderen Ausführungsform ist die Geometrie und insbesondere die Anordnung der Ein- und Auslasskanäle 12, 13, 14, 15 so gewählt, dass die beiden Längsnuten 23, 24 nicht diametral gegenüber angeordnet sind, sondern z.B. auf der gleichen Seite.

Fig. 4 zeigt einen Radialschnitt einer Ausführungsform eines Thermostatventils, die im Prinzip der Ausführungsform nach Fig. 1 bis 3 entspricht. Der Radialschnitt ist durch den Auslasskanal gelegt. Anstelle einer als Kurzschlussverbindung dienenden Längsnut 24 des Ausführungsbeispiels nach Fig. 1 bis 3 sind zwei parallele Längsnuten 24a, 24b vorgesehen, zwischen denen ein Führungsabschnitt 25 für das Ventilschieberelement belassen ist.

## Patentansprüche

1. Thermostatventil zum Verbinden eines automatischen Getriebes mit einem Ölkühler, das einen Einlasskanal (12) für von dem Getriebe kommendes Öl, einen Auslasskanal (13) zu dem Ölkühler, einen Einlasskanal (14) für von dem Ölkühler kommendes Öl und einen Auslasskanal (15) zu dem Getriebe aufweist, wobei die Verbindung zwischen dem Einlasskanal für von dem Getriebe kommendes Öl und dem Auslasskanal zu dem Ölkühler mittels eines von einem thermostatischen Arbeitselement (16, 17) betätigten, mit einer Rückstellfeder (21) belasteten Ventilelements (22) freigegeben oder gesperrt wird, wobei ein erster Kurzschlusskanal zwischen dem Einlasskanal (12) für von dem Getriebe kommendes Öl und dem Auslasskanal (15) zurück zum Getriebe vorgesehen ist, der von dem Ventilelement (22) nach Ansprechen des thermostatischen Arbeitselements (16, 17) geschlossen wird, **dadurch gekennzeichnet, dass** das Ventilelement (22) zusammen mit seiner Rückstellfeder (21) als ein Überdruckventil ausgebildet ist, das in einer Freigabestellung für die Verbindung zwischen Einlasskanal (12) für von dem Getriebe kommendes Öl und dem Auslasskanal (13) zu dem Ölkühler bei Überschreiten eines vorbestimmten Druckes des Öls anspricht und durch Verschieben des Ventilelements (22) gegen die Rückstellfeder (21) einen zweiten Kurzschlusskanal (24) zwischen dem Einlasskanal (12) für von dem Getriebe kommendes Öl und dem Auslasskanal (15) zurück zu dem Getriebe freigibt, wobei der zweite Kurzschlusskanal (24) derart in dem Verstellweg des Ventilelementes (22) angeordnet ist, dass das thermostatische Arbeitselement (16, 17) nicht aufgrund der Öltemperatur das Ventilelement (22) bis zu einer den zweiten Kurzschlusskanal freigebenden Position verstellt.

2. Thermostatventil nach Anspruch 1, **dadurch gekennzeichnet, dass** ein Ventilgehäuse (10) für das thermostatische Arbeitselement (16, 17) und für die Rückstellfeder (21) eine Aufnahmebohrung (11) aufweist, in der die Einlaßkanäle (12, 14) und die Auslasskanäle (13, 15) münden, und dass zwischen dem Einlasskanal (12) für von dem Getriebe kommendes Öl und dem Auslasskanal (13) zu dem Ölkühler ein Ventilschieberelement (22) angeordnet ist.

3. Thermostatventil nach Anspruch 2, **dadurch gekennzeichnet, dass** das Ventilschieberelement (22) mit einem mit der Rückstellfeder (21) belasteten Gehäuse (16) des thermostatischen Arbeitselementes fest verbunden ist, dessen Arbeitskolben (17) gegen einen Anschlag (18) abgestützt ist.

4. Thermostatventil nach Anspruch 2 oder 3, **dadurch gekennzeichnet, dass** in der Aufnahmebohrung (11) eine Längsnut (24) vorgesehen ist, die den zweiten Kurzschlusskanal für das Überdruckventil bildet und die derart angeordnet ist, dass der zweite Kurzschlusskanal bei in der Absperrstellung und in der Freigabestellung befindlichen Ventilschieberelement (22) geschlossen ist und freigegeben wird, wenn das Ventilschieberelement (22) aufgrund erhöhten Druckes des Öls über seine temperaturabhängig im Normalbetrieb erreichbare Freigabestellung hinausbewegt wird.

5. Thermostatventil nach einem der Ansprüche 2 bis 4, **dadurch gekennzeichnet, dass** in der Aufnahmebohrung (11) eine zweite Längsnut (23) angebracht ist, die bei in Absperrstellung befindlichem Ventilschieberelement (22) den ersten Kurzschlusskanal zwischen dem Einlasskanal (12) für von dem Getriebe kommendes Öl und dem Auslasskanal (15) zu dem Getriebe bildet, der in Freigabestellung des Ventilschieberelements (22) geschlossen ist.

6. Thermostatventil nach Anspruch 4 und 5, **dadurch gekennzeichnet, dass** die den Kurzschlusskanal bildende Längsnut (24) und die zweite Längsnut (23) in der Aufnahmebohrung (11) diametral gegenüberliegend angeordnet sind.

## Claims

1. A thermostatic valve for connecting an automatic transmission to an oil cooler, which valve comprises an inlet duct (12) for oil coming from the transmission, an outlet duct (13) to the oil cooler, an inlet duct (14) for oil coming from the oil cooler and an outlet duct (15) to the transmission, the connection between the inlet duct for oil coming from the transmission and the outlet duct to the oil cooler being opened or closed by means of a valve element (22) actuated by a thermostatic working element (16, 17) and loaded by a return spring (21), a first bypass duct being provided between the inlet duct (12) for oil coming from the transmission and the outlet duct (15) back to the transmission, which bypass duct is closed by the valve element (22) once the thermostatic working element (16, 17) has responded, **characterised in that** the valve element (22) takes the form, together with its return spring (21), of a pressure relief valve, which, in a position opening the connection between the inlet duct (12) for oil coming from the transmission and the outlet duct (13) to the oil cooler, responds when a predetermined oil pressure is exceeded and opens a second bypass duct (24) between the inlet duct (12) for oil coming from the transmission and the outlet duct (15) back to the transmission by displacing the valve element (22) against the return spring (21), the second bypass duct (24) being arranged in such a way in the displacement path of the valve element (22) that the thermostatic working element (16, 17) does not displace the valve element (22) as far as a position opening the second bypass duct as a result of oil temperature.

2. A thermostatic valve according to claim 1, **characterised in that** a valve housing (10) for the thermostatic working element (16, 17) and for the return spring (21) comprises a receiving bore (11), into which the inlet ducts (12, 14) and the outlet ducts (13, 15) lead, and **in that** a valve gate element (22) is arranged between the inlet duct (12) for oil coming from the transmission and the outlet duct (13) to the oil cooler.

3. A thermostatic valve according to claim 2, **characterised in that** the valve gate element (22) is firmly connected to a housing (16), loaded by the return spring (21), of the thermostatic working element, the working piston (17) of which rests against a limit stop (18).

4. A thermostatic valve according to claim 2 or claim 3, **characterised in that** a longitudinal channel (24) is provided in the receiving bore (11), which longitudinal channel (24) forms the second bypass duct for the pressure relief valve and is arranged in such a way that the second bypass duct is closed when the valve gate element (22) is in the closure and opening positions and is opened if the valve gate element (22) is moved as a result of elevated oil pressure beyond its opening position achievable in temperature-dependent manner in normal operation.

5. A thermostatic valve according to one of claims 2 to 4, **characterised in that** a second longitudinal channel (23) is formed in the receiving bore (11), which second longitudinal channel (23) forms the first bypass duct between the inlet duct (12) for oil coming from the transmission and the outlet duct to the transmission when the valve gate element (22) is in the closure position, said second bypass duct being closed when the valve gate element (22) is in the opening position.

6. A thermostatic valve according to claim 4 and claim 5, **characterised in that** the longitudinal channel (24) forming the bypass duct and the second longitudinal channel (23) are arranged diametrically opposite one another in the receiving bore (11).

## Revendications

1. Vanne thermostatique destinée à raccorder un engrenage automatique à un refroidisseur d'huile, présentant un canal d'admission (12) pour l'huile provenant de l'engrenage, un canal d'évacuation (13) vers le refroidisseur d'huile, un canal d'admission (14) pour l'huile provenant du refroidisseur d'huile et un canal d'évacuation (15) vers l'engrenage, sachant que le raccordement entre le canal d'admission pour l'huile provenant de l'engrenage et le canal d'évacuation vers le refroidisseur d'huile est ouvert ou fermé au moyen d'un obturateur (22) soumis à la charge d'un ressort de rappel (21) et actionné par un élément thermostatique (16, 17), qu'un premier canal de dérivation est prévu entre le canal d'admission (12) pour l'huile provenant de l'engrenage et le canal d'évacuation (15) retour vers l'engrenage, lequel est fermé par l'obturateur (22) après réponse de l'élément thermostatique (16, 17), **caractérisée en ce que** l'obturateur (22) est avec son ressort de rappel (21) conçu en tant que vanne de surpression qui répond en une position de libération pour le raccordement entre le canal d'admission (12) pour l'huile provenant de l'engrenage et le canal d'évacuation (13) vers le refroidisseur d'huile lorsqu'une pression prédéterminée de l'huile est dépassée, et libère un second canal de dérivation (24) entre le canal d'admission (12) pour l'huile provenant de l'engrenage et le canal d'évacuation (15) retour vers l'engrenage en déplaçant l'obturateur (22) contre le ressort de rappel (21), sachant que le second canal de dérivation (24) est disposé de telle manière dans la course de déplacement de l'obturateur (22) que l'élément thermostatique (16, 17) ne déplace pas en raison de la température de l'huile l'obturateur (22) jusque dans une position libérant le second canal de dérivation.

2. Vanne thermostatique selon la revendication 1, **caractérisée en ce qu'**un boîtier de soupape (10) pour l'élément thermostatique (16, 17) et pour le ressort de rappel (21) présente un orifice de réception (11), dans lequel les canaux d'admission (12, 14) et les canaux d'évacuation (13, 15) aboutissent, et qu'est disposé entre le canal d'admission (12) pour l'huile provenant de l'engrenage et le canal d'évacuation (13) vers le refroidisseur d'huile un obturateur coulissant (22).

3. Vanne thermostatique selon la revendication 2, **caractérisée en ce que** l'obturateur coulissant (22) est relié de manière fixe à un boîtier (16), soumis à la charge du ressort de rappel (21), de l'élément thermostatique, dont le piston de travail (17) est appuyé contre une butée (18).

4. Vanne thermostatique selon la revendication 2 ou 3, **caractérisée en ce qu'**est prévue dans l'orifice de réception (11) une rainure longitudinale (24) qui forme le second canal de dérivation pour la vanne de surpression, et qui est disposée de telle manière que le second canal de dérivation est fermé lorsque l'obturateur coulissant (22) se trouve en position de blocage et en position de libération, et est libéré lorsque l'obturateur coulissant (22) est déplacé, en raison d'une pression élevée de l'huile, au-delà de sa position de libération atteignable selon la température en fonctionnement normal.

5. Vanne thermostatique selon l'une des revendications 2 à 4, **caractérisée en ce qu'**est disposée dans l'orifice de réception (11) une seconde rainure longitudinale (23) qui, lorsque l'obturateur coulissant (22) se trouve en position de blocage, forme le premier canal de dérivation entre le canal d'admission (12) pour l'huile provenant de l'engrenage et le canal d'évacuation (15) vers l'engrenage, lequel canal de dérivation est fermé lorsque l'obturateur coulissant (22) est en position de libération.

6. Vanne thermostatique selon les revendications 4 et 5, **caractérisée en ce que** la rainure longitudinale (24) formant le canal de dérivation et la seconde rainure longitudinale (23) dans l'orifice de réception (11) sont disposées de manière diamétralement opposée.
